# EUROPEAN PATENT APPLICATION

(11) **EP 2 187 574 A1**
(43) Date of publication of application: **19.05.2010**
(21) Application number: 08800790.1
(22) Date of filing: 05.09.2008
(51) Int. Cl.: H04L 12/56, H04L 1/00, H04L 12/66, H04L 1/22

(54) **METHOD, MEDIA GATEWAY AND SYSTEM FOR CONTROLLING REDUNDANT DATA PACKETS TRANSPORT**

(30) Priority: 14.09.2007 CN 200710152148
(71) Applicant: Huawei Technologies Co., Ltd., Longgang District, Shenzhen Guangdong 518129 (CN)
(72) Inventor: XU, Quansong, Guangdong 518129 (CN)
(74) Representative: Körber, Martin Hans
(86) International application number: PCT/CN2008/072278
(87) International publication number: WO 2009/039754

(57) **Abstract**

A method for controlling redundant data packet transmission is provided, which includes: transmitting data packets between media gateways; and controlling whether to transmit redundant data packets between the media gateways according to a packet loss condition of the data packets detected by the media gateways during the transmission of the data packets. A media gateway and a system for controlling redundant data packet transmission are also provided. Accordingly, the function of redundant data packets is fully achieved and it is controlled in real time whether to transmit redundant data packets according to the packet loss environment of the network. Thus, when it is detected that packet loss occurs, the quality of service is guaranteed by sending the redundant data packets, and when it is detected that no packet loss occurs, the network bandwidth resources are effectively saved by sending ordinary data packets carrying no redundant data.

## Description

The application claims the benefit of priority to Chinese Patent Application No. 200710152148.7, filed on September 14, 2007, and entitled "METHOD, MEDIA GATEWAY AND SYSTEM FOR CONTROLLING REDUNDANT DATA PACKET TRANSMISSION", which is incorporated herein by reference in its entirety.

### FIELD OF THE TECHNOLOGY

The present invention relates to the field of communication technology, and more particularly to a method, a media gateway, and a system for controlling redundant data packet transmission.

### BACKGROUND OF THE INVENTION

The Real-time Transport Protocol (RTP) is a network transmission protocol that specifies standard data packet formats for transferring audio and video over Internet in detail. The RTP Payload for Redundant Audio Data, that is, RFC2198, describes redundant transmission mechanisms and packet formats in the RTP, which is mainly applied in transmission of ordinary voice data packets, and also applied in Fax over IP (FoIP) and Modem over IP (MoIP). An RFC2198 data packet is an RTP data packet carrying redundant data, which may be applied to compensate for packet loss during the network transmission, so as to improve the reliability of data packet transmission. In the case of poor network quality, by transmitting RFC2198 data packets, it can be assured that the quality of service is not affected.

The RFC2198 data packets are generally transmitted between media gateways.

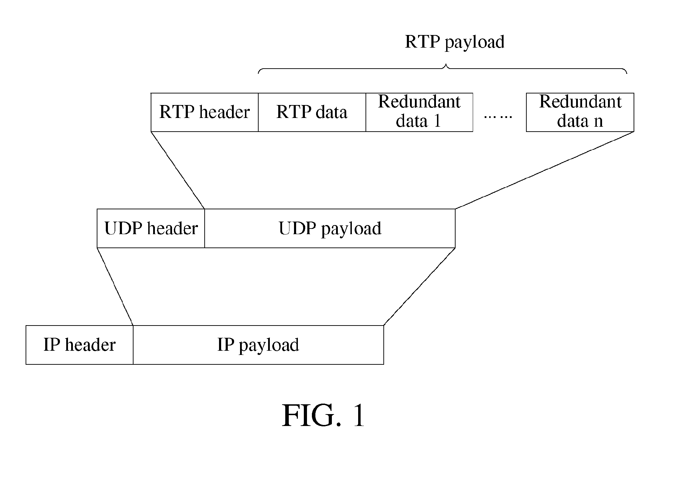

Before RFC2198 data packets are sent, RFC2198 parameters on a local media gateway and a peer media gateway are configured to be consistent through negotiation, so that no packet loss occurs between the media gateways because of failure to identify the RFC2198 data packets. The RFC2198 parameters include a capability of supporting transmission of an RFC2198 data packet, a type identifying an RFC2198 data packet, and the number of redundant data in an RFC2198 data packet. After a call is established and RFC2198 parameters are determined through negotiation, RFC2198 data packets are continuously sent between the media gateways. FIG. 1 is a structural view of an RFC2198 data packet. Referring to FIG. 1, an RFC2198 data packet includes an Internet Protocol (IP) header, a User Datagram Protocol (UDP) header, an RTP header, and an RTP payload. The RTP payload not only includes RTP data to be transmitted currently, but also includes RTP data that has already been sent. The RTP data that has already been sent is redundant data 1-n shown in FIG. 1, the number of the redundant data may be one or more, and when packet loss occurs during the network transmission, the lost packets may be recovered by using the redundant data in the RFC2198 data packet. For example, assuming that an RFC2198 data packet 1, an RFC2198 data packet 2, and an RFC2198 data packet 3 are transmitted between media gateways, if the data packet 2 is lost during the transmission, when the data packet 3 is received, the lost data packet 2 may be recovered by using redundant information about the data packet 2 that is included in the data packet 3; similarly, if both the data packet 1 and the data packet 2 are lost during the transmission, when the data packet 3 is received, the two lost data packets may be recovered by using redundant information about the data packet 1 and the data packet 2 that is included in the data packet 3.

As known from the above description, in the prior art, the lost packets in the network are compensated by continuously sending RFC2198 data packets. The more the redundant data is, the higher the capability of preventing packet loss will be. However, with the increase of the redundant data, the network bandwidth occupied by sending the RFC2198 data packets is increased accordingly. For example, an RTP data packet without any redundant data has a length of 200 bytes, including an IP header of 20 bytes, a UDP header of 8 bytes, an RTP header of 12 bytes, and an RTP payload of 160 bytes. If it intends to send an RFC2198 data packet carrying one redundant data, the RTP payload needs to be increased by 160 bytes, and accordingly, if it intends to send an RFC2198 data packet carrying two redundant data, the RTP payload needs to be increased by 320 bytes. Therefore, with the increase of the redundant data, the bandwidth consumed by the RFC2198 data packet is basically multiplied for twice or third times or even higher. Thus, when the RFC2198 data packet is sent in a network environment without any packet loss, the quality of service cannot be improved, the function of the redundant data cannot be achieved, and a large amount of network bandwidth resources are consumed.

### SUMMARY OF THE INVENTION

Accordingly, the present invention is directed to a method, a system, and a media gateway for controlling redundant data packet transmission.

In order to achieve the objectives of the present invention, the present invention provides the following technical solutions.

A method for controlling redundant data packet transmission is provided, which includes the following steps.

Data packets are transmitted between media gateways.

It is controlled whether to transmit redundant data packets between the media gateways according to a detected packet loss condition of the data packets during the data packet transmission.

A media gateway for controlling redundant data packet transmission is provided, which includes a detecting unit, a reporting unit, and a transmitting unit.

The detecting unit is configured to detect whether packet loss occurs to data packets sent from a peer media gateway.

The reporting unit is configured to report a detection result of the detecting unit to a softswitch.

The transmitting unit is configured to select whether to send redundant data packets to the peer media gateway after receiving a notification from the softswitch.

A media gateway for controlling redundant data packet transmission is provided, which includes a receiving unit, a detecting unit, a transmitting unit, and a sending unit.

The receiving unit is configured to receive a control data packet sent from a peer media gateway, where the control data packet carries a packet loss ratio and/or the number of lost packets among data packets sent from the local media gateway to the peer media gateway.

The detecting unit is configured to detect whether a value of the packet loss ratio or the number of lost packets in the control data packet sent from the peer media gateway is greater than a preset value.

The transmitting unit is configured to select whether to send redundant data packets to the peer media gateway according to a detection result of the detecting unit.

The sending unit is configured to send a control data packet to the peer media gateway, where the control data packet carries a packet loss ratio and the number of lost packets among data packets sent from the peer media gateway to the local media gateway.

A system for controlling redundant data packet transmission is provided, which includes at least two media gateways and a softswitch.

The media gateways are configured to detect a packet loss condition among received data packets when data packets are transmitted between the media gateways.

The softswitch is configured to control whether to transmit redundant data packets between the media gateways according to the packet loss condition of the data packets detected by the media gateways.

As seen from the technical solutions according to embodiments of the present invention, when data packets are transmitted between the media gateways according to embodiments of the present invention, the softswitch or the media gateways themselves control whether to transmit redundant data between the media gateways according to the packet loss condition of the data packets detected by the media gateways. Through the embodiments of the present invention, the function of the redundant data packets can be fully achieved, and it can be controlled in real time whether to transmit redundant data packets according to the packet loss environment of the network. Thus, when it is detected that packet loss occurs, the quality of service is guaranteed by sending the redundant data packets, and when it is detected that no packet loss occurs, the network bandwidth resources are effectively saved by sending ordinary data packets carrying no redundant data.

### BRIEF DESCRIPTION OF THE DRAWINGS

FIG. 1 is a structural view of an RFC2198 data packet;
FIG. 2 is a flow chart of a first embodiment of a method according to the present invention;
FIG. 3 is a flow chart of a second embodiment of the method according to the present invention;
FIG. 4 is a specific flow chart of the second embodiment of the method according to the present invention;
FIG. 5 is another specific flow chart of the second embodiment of the method according to the present invention;
FIG. 6 is a flow chart of a third embodiment of the method according to the present invention;
FIG. 7 is a specific flow chart of the third embodiment of the method according to the present invention;
FIG. 8 is another specific flow chart of the third embodiment of the method according to the present invention;
FIG. 9 is a block diagram of an embodiment of a media gateway according to the present invention;
FIG. 10 is a block diagram of an embodiment of another media gateway according to the present invention;
FIG. 11 is a block diagram of a first embodiment of a system according to the present invention; and
FIG. 12 is a block diagram of a second embodiment of the system according to the present invention.

### DETAILED DESCRIPTION OF THE EMBODIMENTS

The present invention provides a method, a system, and a media gateway for controlling redundant data packet transmission. The method includes: transmitting data packets between media gateways; and controlling whether to transmit redundant data packets between the media gateways according to a packet loss condition of the data packets detected by the media gateways during the transmission of the data packets. Through the above mode, when it is detected that packet loss occurs, the quality of service is guaranteed by sending redundant data packets, and when it is detected that no packet loss occurs, the network bandwidth resources are effectively saved by sending ordinary data packets.

In order to make the technical solutions of the present invention more comprehensible, the present invention is described in further detail below with reference to the accompanying drawings and specific embodiments.

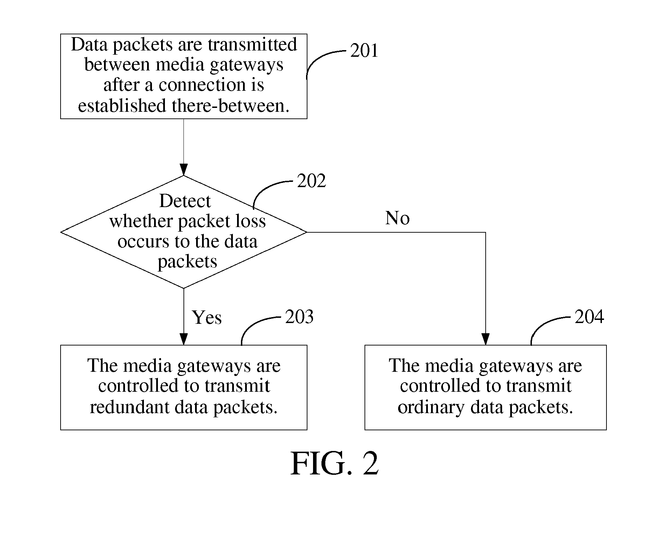

FIG. 2 is a flow chart of a first embodiment of a method according to the present invention. Referring to FIG. 2, the method includes the following steps.

In step 201, data packets are transmitted between media gateways after a connection is established there-between.

The connection established between the media gateways includes one of an audio connection, a video connection, an FoIP connection, or an MoIP connection.

Furthermore, after the connection is established between the media gateways and before the data packets are transmitted, relevant parameters of redundant data packets transmitted between the media gateways are further negotiated. The parameters include a capability of supporting transmission of a redundant data packet, a type of a redundant data packet, and the number of redundant data carried in a redundant data packet.

In step 202, it is detected whether packet loss occurs to the data packets, and if yes, the process proceeds to step 203; otherwise, the process proceeds to step 204.

During the transmission of the data packets between the media gateways, a local media gateway detects whether packet loss occurs to data packets sent from a peer media gateway; or the local media gateway detects whether packet loss occurs to data packets sent from the local media gateway to the peer media gateway according to a received control data packet sent from the peer media gateway.

In step 203, the media gateways are controlled to transmit redundant data packets, and the current process ends.

When the local media gateway detects that packet loss occurs to ordinary data packets sent from the peer media gateway, a softswitch controls the peer media gateway to send redundant data packets to the local media gateway; and when the local media gateway detects that packet loss occurs to ordinary data packets sent from the local media gateway to the peer media gateway according to a control data packet sent from the peer media gateway, the local media gateway controls itself to send redundant data packets to the peer media gateway.

In step 204, the media gateways are controlled to transmit ordinary data packets, and the current process ends.

When the local media gateway detects that no packet loss occurs to redundant data packets sent from the peer media gateway within a period of time, the softswitch controls the peer media gateway to send ordinary data packets to the local media gateway; and when the local media gateway detects that no packet loss occurs to redundant data packets sent from the local media gateway to the peer media gateway according to a control data packet sent from the peer media gateway, the local media gateway controls itself to send ordinary data packets to the peer media gateway.

Second embodiment of the method according to the present invention

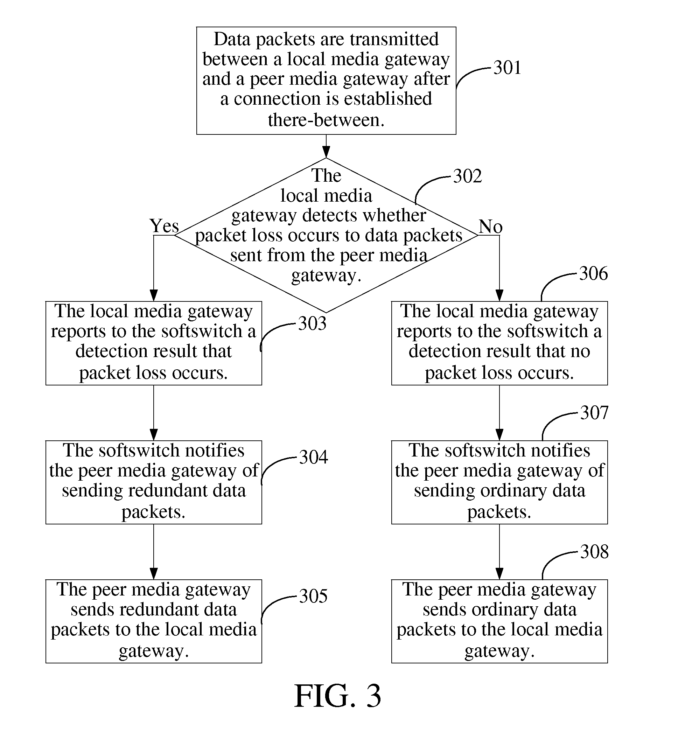

FIG. 3 is a flow chart of a second embodiment of the method according to the present invention. This embodiment involves a process that a softswitch controls whether to transmit redundant data packets, where a local media gateway serves as an active party for detection and a peer media gateway serves as a passive party for detection.

In step 301, data packets are transmitted between a local media gateway and a peer media gateway after a connection is established there-between.

Since the transmission of redundant data packets needs to be supported after the connection is established between the local media gateway and the peer media gateway, relevant parameters of redundant data packets transmitted between the local media gateway and the peer media gateway are firstly negotiated through a softswitch. The parameters include a capability of supporting transmission of a redundant data packet, a type of a redundant data packet, and the number of redundant data carried in a redundant data packet.

After the local media gateway and the peer media gateway negotiate the relevant parameters of redundant data packets, data packets start to be transmitted. Initially, ordinary data packets carrying no redundant data are transmitted between the media gateways, and when it is detected that packet loss occurs, redundant data packets carrying redundant data are transmitted between the media gateways. The type of the transmitted redundant data packets and the number of redundant data carried in the redundant data packets are consistent with the negotiated parameters.

In step 302, the local media gateway detects whether packet loss occurs to data packets sent from the peer media gateway, and if yes, the process proceeds to step 303; otherwise, the process proceeds to step 306.

When ordinary data packets are continuously transmitted between the local media gateway and the peer media gateway, the local media gateway serving as the active party for detection detects whether packet loss occurs to ordinary data packets sent from the peer media gateway; and when redundant data packets are continuously transmitted between the local media gateway and the peer media gateway, the local media gateway serving as the active party for detection detects whether packet loss occurs to redundant data packets sent from the peer media gateway.

In step 303, the local media gateway reports to the softswitch a detection result that packet loss occurs.

When ordinary data packets are continuously transmitted between the local media gateway and the peer media gateway, if the local media gateway serving as the active party for detection detects that packet loss occurs to ordinary data packets sent from the peer media gateway, the local media gateway reports a detection result about the current packet loss event to the softswitch; and when redundant data packets are continuously transmitted between the local media gateway and the peer media gateway, if the local media gateway serving as the active party for detection detects that packet loss occurs to redundant data packets sent from the peer media gateway, the transmission of redundant data packets between the local media gateway and the peer media gateway is continued, so as to compensate for packets lost during the transmission.

In step 304, the softswitch notifies the peer media gateway of sending redundant data packets.

When the softswitch receives the detection result sent from the local media gateway, that is, the detection result that packet loss occurs to the ordinary data packets sent from the peer media gateway, the softswitch notifies the peer media gateway of stopping transmitting ordinary data packets to the local media gateway, and starting to transmit redundant data packets to the local media gateway, so as to compensate for packets lost during the transmission of ordinary data packets.

In step 305, the peer media gateway sends redundant data packets to the local media gateway, and the current process ends.

After receiving a notification from the softswitch, the peer media gateway stops sending ordinary data packets to the local media gateway, and at the same time, starts to transmit redundant data packets to the local media gateway.

In step 306, the local media gateway reports to the softswitch a detection result that no packet loss occurs.

When redundant data packets are continuously transmitted between the local media gateway and the peer media gateway, if the local media gateway serving as the active party for detection detects that no packet loss occurs to redundant data packets sent from the peer media gateway within a period of time, the local media gateway reports to the softswitch a detection result that no packet loss occurs currently; and when ordinary data packets are continuously transmitted between the local media gateway and the peer media gateway, if the local media gateway serving as the active party for detection detects that no packet loss occurs to ordinary data packets sent from the peer media gateway, the transmission of ordinary data packets between the local media gateway and the peer media gateway is continued.

In step 307, the softswitch notifies the peer media gateway of sending ordinary data packets.

When the softswitch receives the detection result sent from the local media gateway, that is, the detection result that no packet loss occurs to redundant data packets sent from the peer media gateway within a period of time, the softswitch notifies the peer media gateway of stopping transmitting redundant data packets to the local media gateway, and starting to transmit ordinary data packets to the local media gateway.

In step 308, the peer media gateway sends ordinary data packets to the local media gateway, and the current process ends.

After receiving a notification from the softswitch, the peer media gateway stops sending redundant data packets to the local media gateway, and at the same time, starts to transmit ordinary data packets to the local media gateway.

In the second embodiment of the method of the present invention, the ordinary data packets transmitted between the media gateways are generally RTP data packets carrying no redundant data, and the redundant data packets transmitted between the media gateways are generally RFC2198 data packets carrying redundant data.

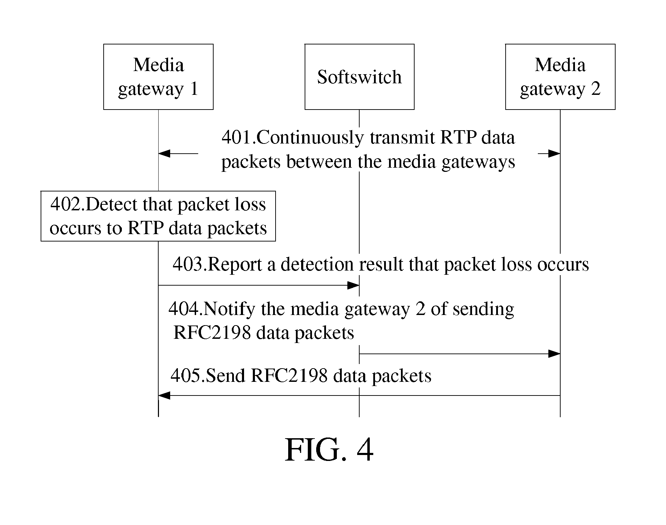

In the second embodiment of the method of the present invention, when it is detected that packet loss occurs to RTP data packets continuously transmitted between the media gateways, the softswitch controls to transmit RFC2198 data packets through the following specific process as shown in FIG. 4.

In step 401, RTP data packets are continuously transmitted between a media gateway 1 and a media gateway 2.

In step 402, the media gateway 1 detects that packet loss occurs to RTP data packets sent from the media gateway 2.

In step 403, the media gateway 1 reports to the softswitch a detection result that packet loss occurs.

In step 404, the softswitch notifies the media gateway 2 of sending RFC2198 data packets.

In step 405, the media gateway 2 sends RFC2198 data packets to the media gateway 1, and the current process ends.

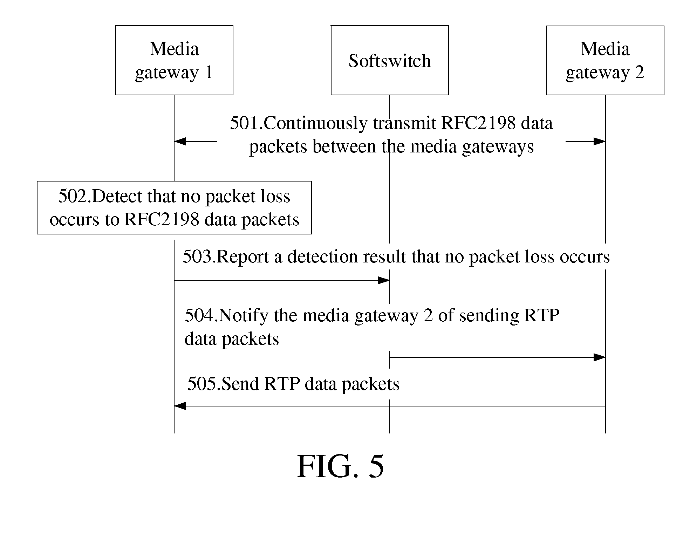

In the second embodiment of the method of the present invention, when it is detected that no packet loss occurs to RFC2198 data packets continuously transmitted between the media gateways, the softswitch controls to transmit RTP data packets through the following specific process as shown in FIG. 5.

In step 501, RFC2198 data packets are continuously transmitted between a media gateway 1 and a media gateway 2.

In step 502, the media gateway 1 detects that no packet loss occurs to RFC2198 data packets sent from the media gateway 2 within a period of time.

In step 503, the media gateway 1 reports to the softswitch a detection result that no packet loss occurs.

In step 504, the softswitch notifies the media gateway 2 of sending RTP data packets.

In step 505, the media gateway 2 sends RTP data packets to the media gateway 1, and the current process ends.

As seen from the description about the second embodiment of the method of the present invention, if it is detected that packet loss occurs when RTP data packets are continuously transmitted between the media gateways, the softswitch controls to transmit RFC2198 data packets carrying redundant data between the media gateways, so that packets lost in the network can be recovered, thereby improving the quality of service; and if it is detected that no packet loss occurs within a period of time when RFC2198 data packets are continuously transmitted between the media gateways, the softswitch controls to transmit RTP data packets carrying no redundant data between the media gateways, so that the occupied network bandwidth resources are reduced while alleviating the packet loss condition in the network.

Third embodiment of the method of the present invention

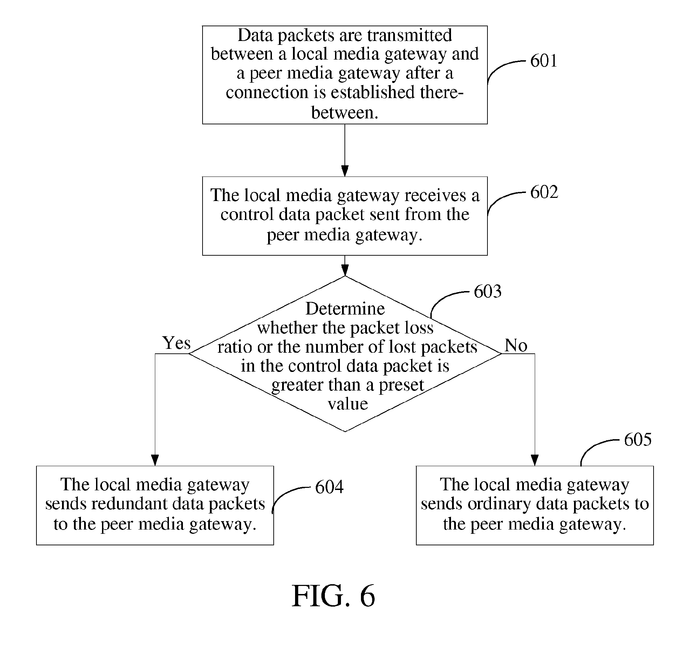

FIG. 6 is a flow chart of a third embodiment of the method according to the present invention. This embodiment involves a process that media gateways themselves control whether to transmit redundant data packets, where a local media gateway serves as an active party for detection and a peer media gateway serves as a passive party for detection.

In step 601, data packets are transmitted between a local media gateway and a peer media gateway after a connection is established there-between.

Since the transmission of redundant data packets needs to be supported after the connection is established between the local media gateway and the peer media gateway, the local media gateway and the peer media gateway firstly negotiate relevant parameters of redundant data packets transmitted there-between. The parameters include a capability of supporting transmission of a redundant data packet, a type of a redundant data packet, and the number of redundant data carried in a redundant data packet.

After the local media gateway and the peer media gateway negotiate the relevant parameters of redundant data packets, data packets start to be transmitted. Initially, ordinary data packets carrying no redundant data are transmitted between the media gateways, and when it is detected that packet loss occurs, redundant data packets carrying redundant data are transmitted between the media gateways. The type of the transmitted redundant data packets and the number of redundant data carried in the redundant data packets are consistent with the negotiated parameters.

In step 602, the local media gateway receives a control data packet sent from the peer media gateway.

When ordinary data packets are continuously transmitted between the local media gateway and the peer media gateway, after the peer media gateway serving as the passive party for detection continuously receives ordinary data packets sent from the local media gateway for a period of time, the peer media gateway returns a control data packet for the received ordinary data packets to the local media gateway, where the control data packet carries a packet loss ratio and/or the number of lost packets among the ordinary data packets sent from the local media gateway to the peer media gateway; and when redundant data packets are continuously transmitted between the local media gateway and the peer media gateway, after the peer media gateway serving as the passive party for detection continuously receives redundant data packets sent from the local media gateway for a period of time, the peer media gateway returns a control data packet for the received redundant data packets to the local media gateway, where the control data packet carries a packet loss ratio and/or the number of lost packets among the redundant data packets sent from the local media gateway to the peer media gateway.

In step 603, it is determined whether the packet loss ratio or the number of lost packets in the control data packet is greater than a preset value, and if yes, the process proceeds to step 604; otherwise, the process proceeds to step 605.

When ordinary data packets are continuously transmitted between the local media gateway and the peer media gateway, the local media gateway serving as the active party for detection detects whether the packet loss ratio and/or the number of lost packets in the control data packet sent from the peer media gateway for the ordinary data packets transmitted within a period of time is greater than the preset value; and when redundant data packets are continuously transmitted between the local media gateway and the peer media gateway, the local media gateway serving as the active party for detection detects whether the packet loss ratio and/or the number of lost packets in the control data packet sent from the peer media gateway for the redundant data packets transmitted within a period of time is greater than the preset value.

The control data packet received by the local media gateway carries a packet loss ratio and/or the number of lost packets. The packet loss ratio and/or the number of lost packets represent a packet loss condition of data packets sent from the local media gateway to the peer media gateway within a period of time. For example, if the local media gateway sends 1000 data packets to the peer media gateway within a period of time, and 10 packets are lost, the parameter of "packet loss ratio" in the control data packet is set to 1%, and the parameter of "number of lost packets" in the control data packet is set to 10. The two parameters represent the same packet loss condition, and the only difference lies in that they are different parameters. Therefore, after receiving the control data packet, the local media gateway only needs to detect whether any one of the packet loss ratio and the number of lost packets is greater than the preset value.

In step 604, the local media gateway sends redundant data packets to the peer media gateway, and the current process ends.

When ordinary data packets are continuously transmitted between the local media gateway and the peer media gateway, if the local media gateway serving as the active party for detection detects that the packet loss ratio or the number of lost packets in the control data packet sent from the peer media gateway is greater than the preset value, the local media gateway stops sending ordinary data packets to the peer media gateway, and starts to transmit redundant data packets to the peer media gateway; and when redundant data packets are continuously transmitted between the local media gateway and the peer media gateway, if the local media gateway serving as the active party for detection detects that the packet loss ratio or the number of lost packets in the control data packet sent from the peer media gateway is greater than the preset value, the local media gateway continues transmitting redundant data packets to the peer media gateway, so as to compensate for packets lost during the transmission.

In step 605, the local media gateway sends ordinary data packets to the peer media gateway, and the current process ends.

When redundant data packets are continuously transmitted between the local media gateway and the peer media gateway, if the local media gateway serving as the active party for detection detects that the packet loss ratio or the number of lost packets in the control data packet sent from the peer media gateway does not exceed the preset value, the local media gateway stops sending redundant data packets to the peer media gateway, and starts to transmit ordinary data packets to the peer media gateway; and when ordinary data packets are continuously transmitted between the local media gateway and the peer media gateway, if the local media gateway serving as the active party for detection detects that the packet loss ratio or the number of lost packets in the control data packet sent from the peer media gateway does not exceed the preset value, the local media gateway continues transmitting ordinary data packets to the peer media gateway, so as to save the network bandwidth resources.

In the third embodiment of the method according to the present invention, the ordinary data packets transmitted between the media gateways are generally RTP data packets carrying no redundant data, the control data packets transmitted between the media gateways are generally Real-time Transport Control Protocol (RTCP) data packets carrying a packet loss ratio and/or the number of lost packets, and the redundant data packets transmitted between the media gateways are generally RFC2198 data packets carrying redundant data.

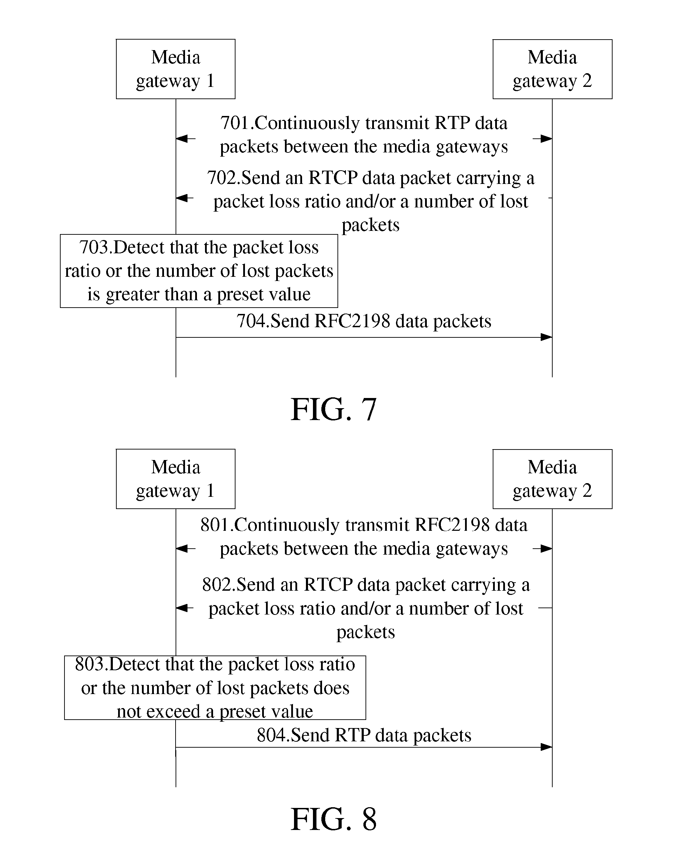

In the third embodiment of the method according to the present invention, when RTP data packets are continuously transmitted between the media gateways, the media gateways themselves control the transmission of RFC2198 data packets through a specific process shown in FIG. 7.

In step 701, RTP data packets are continuously transmitted between a media gateway 1 and a media gateway 2.

In step 702, the media gateway 2 sends to the media gateway 1 an RTCP data packet carrying a packet loss ratio and/or the number of lost packets among RTP data packets sent from the media gateway 1.

In step 703, the media gateway 1 detects that the packet loss ratio or the number of lost packets in the RTCP data packet is greater than a preset value.

In step 704, the media gateway 1 sends RFC2198 data packets to the media gateway 2, and the current process ends.

In the third embodiment of the method according to the present invention, when RFC2198 data packets are continuously transmitted between the media gateways, the media gateways themselves control the transmission of RTP data packets through a specific process shown in FIG. 8.

In step 801, RFC2198 data packets are continuously transmitted between a media gateway 1 and a media gateway 2.

In step 802, the media gateway 2 sends to the media gateway 1 an RTCP data packet carrying a packet loss ratio and/or the number of lost packets among RFC2198 data packets sent from the media gateway 1.

In step 803, the media gateway 1 detects that the packet loss ratio or the number of lost packets within a period of time in the RTCP data packet does not exceed a preset value.

In step 804, the media gateway 1 sends RTP data packets to the media gateway 2, and the current process ends.

As seen from the description about the third embodiment of the method according to the present invention, when RTP data packets are continuously transmitted between the media gateways, if it is detected that the packet loss ratio or the number of lost packets in the RTCP data packet is greater than the preset value, the media gateways themselves control to transmit RFC2198 data packets carrying redundant data between the media gateways, so that packets lost in the network can be recovered, thereby improving the quality of service; and when RFC2198 data packets are continuously transmitted between the media gateways, if it is detected that the packet loss ratio or the number of lost packets in the RTCP data packet does not exceed the preset value, the media gateways themselves control to transmit RTP data packets carrying no redundant data between the media gateways, so that the occupied network bandwidth resources are reduced while alleviating the packet loss condition in the network.

Corresponding to the embodiments of the method of the present invention, the present invention further provides a media gateway for controlling redundant data packet transmission through a softswitch and a media gateway for controlling redundant data packet transmission through the media gateway itself.

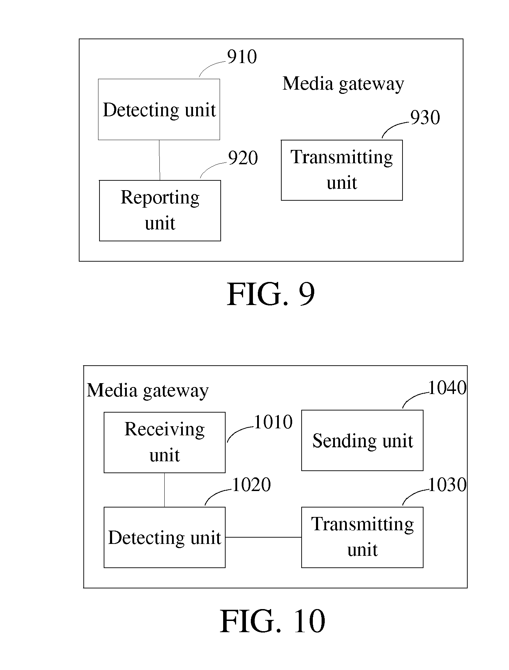

FIG. 9 is a block diagram of an embodiment of a media gateway for controlling redundant data packet transmission according to the present invention.

Referring to FIG. 9, the media gateway includes a detecting unit 910, a reporting unit 920, and a transmitting unit 930.

The detecting unit 910 is configured to detect whether packet loss occurs to data packets sent from a peer media gateway. The reporting unit 920 is configured to report a detection result of the detecting unit 910 to a softswitch. The transmitting unit 930 is configured to select whether to send redundant data packets to the peer media gateway after receiving a notification from the softswitch.

Specifically, when the media gateway receives a notification from the softswitch that packet loss occurs to ordinary data packets carrying no redundant data sent from the peer media gateway, the transmitting unit 930 is specifically a redundant data packet transmitting unit, configured to send redundant data packets to the peer media gateway after receiving the notification from the softswitch; and when the media gateway receives a notification from the softswitch that no packet loss occurs to redundant data packets sent from the peer media gateway, the transmitting unit 930 is specifically an ordinary data packet transmitting unit, configured to send ordinary data packets carrying no redundant data to the peer media gateway after receiving the notification from the softswitch.

FIG. 10 is a block diagram of an embodiment of another media gateway for controlling redundant data packet transmission according to the present invention.

Referring to FIG. 10, the media gateway includes a receiving unit 1010, a detecting unit 1020, a transmitting unit 1030, and a sending unit 1040.

The receiving unit 1010 is configured to receive a control data packet sent from a peer media gateway, where the control data packet carries a packet loss ratio and/or the number of lost packets among data packets sent from the local media gateway to the peer media gateway. The detecting unit 1020 is configured to detect whether a value of the packet loss ratio or the number of lost packets in the control data packet sent from the peer media gateway is greater than a preset value. The transmitting unit 1030 is configured to select whether to send redundant data packets to the peer media gateway according to a detection result of the detecting unit 1020. The sending unit 1040 is configured to send a control data packet to the peer media gateway, where the control data packet carries a packet loss ratio and the number of lost packets among data packets sent from the peer media gateway to the local media gateway.

Specifically, when the detecting unit 1020 detects that a packet loss ratio or the number of lost packets among ordinary data packets carrying no redundant data sent from the local media gateway to the peer media gateway is greater than the preset value, the transmitting unit 1030 is specifically a redundant data packet transmitting unit, configured to send redundant data packets to the peer media gateway according to a detection result of the detecting unit 1020; and when the detecting unit 1020 detects that a packet loss ratio or the number of lost packets among redundant data packets sent from the local media gateway to the peer media gateway does not exceed the preset value, the transmitting unit 1030 is specifically an ordinary data packet transmitting unit, configured to send ordinary data packets carrying no redundant data to the peer media gateway according to a detection result of the detecting unit 1020.

Corresponding to the embodiments of the method of the present invention, the present invention further provides a system for controlling redundant data packet transmission through a softswitch.

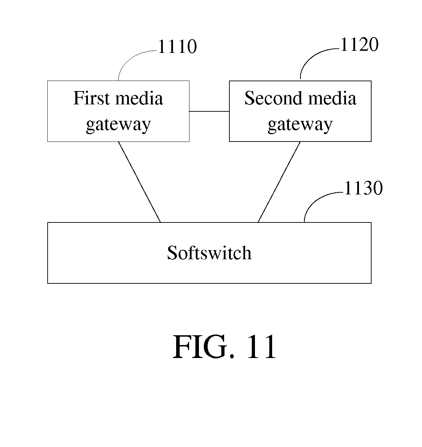

FIG. 11 is a block diagram of a first embodiment of a system for controlling redundant data packet transmission according to the present invention.

Referring to FIG. 11, the system includes a first media gateway 1110, a second media gateway 1120, and a softswitch 1130.

The first media gateway 1110 and the second media gateway 1120 are respectively configured to detect a packet loss condition of data packets received from the peer media gateway when data packets are transmitted between the first media gateway 1110 and the second media gateway 1120. The softswitch 1130 is configured to control whether to transmit redundant data packets between the two media gateways according to the packet loss condition of the data packets detected by the first media gateway 1110 or the second media gateway 1120.

In order to demonstrate clearly, as the block diagram of the first embodiment of the system according to the present invention, FIG. 11 merely shows two media gateways with a connection established there-between. However, the system may include several media gateways with a connection established there-between, and all the media gateways may communicate through the softswitch.

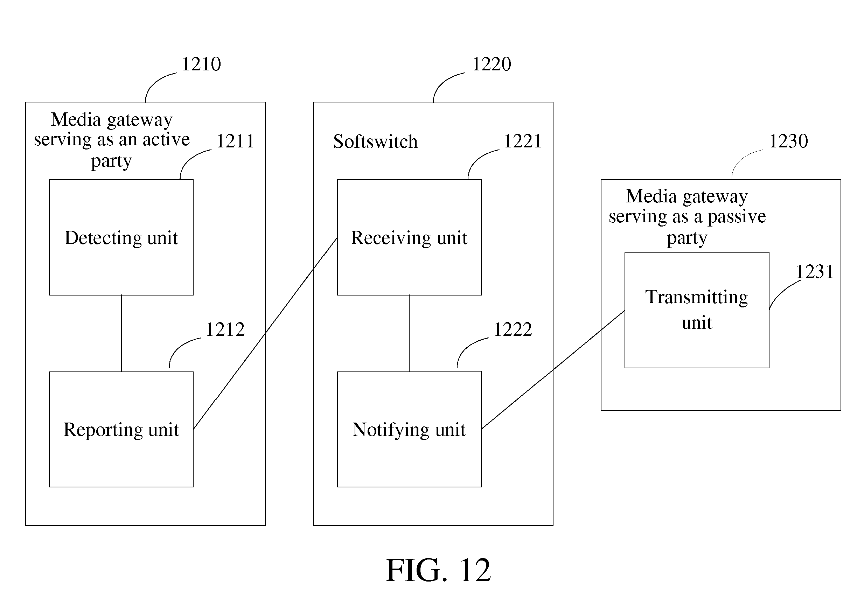

FIG. 12 is a block diagram of a second embodiment of the system for controlling redundant data packet transmission according to the present invention.

Referring to FIG. 12, the system includes a media gateway serving as an active party 1210, a softswitch 1220, and a media gateway serving as a passive party 1230. The media gateway serving as the active party 1210 is configured to transmit data packets to the media gateway serving as the passive party 1230 after a connection is established there-between, and detect a packet loss condition of data packets received from the media gateway serving as the passive party 1230. The softswitch 1220 is configured to control the media gateway serving as the passive party 1230 whether to transmit redundant data packets to the media gateway serving as the active party 1210 according to the packet loss condition of the data packets detected by the media gateway serving as the active party 1210.

The media gateway serving as the active party 1210 includes: a detecting unit 1211, configured to detect whether packet loss occurs to data packets sent from the media gateway serving as the passive party; and a reporting unit 1212, configured to report a detection result of the detecting unit 1211 to the softswitch 1220.

The softswitch 1220 includes: a receiving unit 1221, configured to receive the detection result reported by the reporting unit 1212; and a notifying unit 1222, configured to notify the media gateway serving as the passive party 1230 of whether sending redundant data packets according to the detection result.

The media gateway serving as the passive party 1230 includes: a transmitting unit 1231, configured to select whether to send redundant data packets to the media gateway serving as the active party 1210 after receiving a notification from the softswitch 1220.

Specifically, when the detecting unit 1211 detects that packet loss occurs to ordinary data packets carrying no redundant data sent from the media gateway serving as the passive party 1230, the transmitting unit 1231 is specifically a redundant data packet transmitting unit, configured to send redundant data packets to the media gateway serving as the active party 1210 after receiving a notification from the softswitch 1220; and when the detecting unit 1211 detects that no packet loss occurs to redundant data packets sent from the media gateway serving as the passive party 1230 within a period of time, the transmitting unit 1231 is specifically an ordinary data packet transmitting unit, configured to send ordinary data packets carrying no redundant data to the media gateway serving as the active party 1210 after receiving a notification from the softswitch 1220.

Furthermore, the softswitch 1220 may also include a negotiating unit, configured to negotiate parameters of redundant data packets transmitted between the media gateway serving as the active party 1210 and the media gateway serving as the passive party 1230. The parameters include a capability of supporting transmission of a redundant data packet, a type of a redundant data packet, and the number of redundant data carried in a redundant data packet.

In order to demonstrate clearly, in FIG. 12 as the block diagram of the second embodiment of the system according to the present invention, the media gateway serving as the active party represents a media gateway that detects a packet loss condition, and the media gateway serving as the passive party represents a media gateway that selects data packets to be transmitted according to a detection result. However, in practical applications, all media gateways function as the media gateway serving as the active party and the media gateway serving as the passive party at the same time, that is to say, in FIG. 12, the media gateway serving as the passive party also detects a packet loss condition, and accordingly, the media gateway serving as the active party also selects data packets to be transmitted according to a detection result.

As seen from the description of the embodiments of the present invention, when data packets are transmitted between media gateways in the embodiments of the present invention, the softswitch or the media gateways themselves control whether to transmit redundant data packets between the media gateways according to the packet loss condition of the data packets detected by the media gateways. Through the embodiments of the present invention, the function of the redundant data packets can be fully achieved, and it can be controlled in real time whether to transmit redundant data packets according to the packet loss environment of the network. Thus, when it is detected that packet loss occurs, the quality of service is guaranteed by sending the redundant data packets, and when it is detected that no packet loss occurs, the network bandwidth resources are effectively saved by sending ordinary data packets carrying no redundant data.

Persons of ordinary skill in the art should understand that all or a part of the steps in the method according to the embodiments may be implemented by a program instructing relevant hardware. The program may be stored in a computer readable storage medium. When the program is executed, the following steps are performed: transmitting data packets between media gateways; and controlling whether to transmit redundant data packets between the media gateways according to a packet loss condition of the data packets detected by the media gateways during the transmission of the data packets. The storage medium may be a read-only memory/random access memory (ROM/RAM), a magnetic disk, or an optical disk.

Although the present invention has been described through several embodiments, it is known to those skilled in the art that a myriad of changes, variations, alterations, transformations, and modifications can be made without departing from the spirit of the present invention, and it is intended that the appended claims of the present invention cover such changes, variations, alterations, transformations, and modifications.

## Claims

1. A method for controlling redundant data packet transmission, comprising:
transmitting data packets between media gateways; and
controlling whether to transmit redundant data packets between the media gateways according to a detected packet loss condition of the data packets during the transmission of the data packets.

2. The method according to claim 1, wherein detecting the packet loss condition of the data packets further comprises:
detecting, by a detection media gateway, a packet loss condition of data packets of a media gateway that sends the data packets according to the received data packets; or
detecting, by the detection media gateway, a packet loss condition of data packets of the detection media gateway according to a received control data packet sent by another media gateway.

3. The method according to claim 2, wherein the controlling whether to transmit redundant data packets between the media gateways further comprises:
controlling, by a softswitch, whether to transmit the redundant data packets between the detection media gateway and the media gateway that sends the data packets, when the detection media gateway detects the packet loss condition of the data packets of the media gateway that sends the data packets according to the received data packets; or
controlling, by the detection media gateway, whether to transmit the redundant data packets between the detection media gateway and the another media gateway, when the detection media gateway detects the packet loss condition of the data packets of the detection media gateway according to the received control data packet sent by another media gateway.

4. The method according to claim 3, wherein when the softswitch controls whether to transmit the redundant data packets, the detection media gateway is a local media gateway, and the controlling whether to transmit the redundant data packets between the media gateways according to the detected packet loss condition of the data packets further comprises:
reporting, by the local media gateway, a detection result about whether packet loss occurs to data packets sent from a peer media gateway to the softswitch;
notifying, by the softswitch, the peer media gateway of whether sending the redundant data packets according to the detection result; and
selecting, by the peer media gateway, whether to send the redundant data packets to the local media gateway after receiving a notification from the softswitch.

5. The method according to claim 4, wherein the controlling whether to transmit the redundant data packets between the media gateways further comprises:
reporting, by the local media gateway, a detection result to the softswitch when detecting that packet loss occurs to ordinary data packets carrying no redundant data sent from the peer media gateway; notifying, by the softswitch, the peer media gateway of sending the redundant data packets according to the detection result; and sending, by the peer media gateway, the redundant data packets to the local media gateway after receiving the notification from the softswitch; or
reporting, by the local media gateway, a detection result to the softswitch when detecting that no packet loss occurs to the redundant data packets sent from the peer media gateway within a period of time; notifying, by the softswitch, the peer media gateway of sending ordinary data packets carrying no redundant data according to the detection result; and sending, by the peer media gateway, the ordinary data packets to the local media gateway after receiving the notification from the softswitch.

6. The method according to claim 3, wherein when the media gateway controls whether to transmit the redundant data packets, the detection media gateway is a local media gateway, and the controlling whether to transmit the redundant data packets between the media gateways according to the detected packet loss condition of the data packets further comprises:
receiving, by the local media gateway, a control data packet sent from the peer media gateway, wherein the control data packet carries a packet loss ratio and/or the number of lost packets among data packets sent from the local media gateway to the peer media gateway; and
selecting, by the local media gateway, whether to send the redundant data packets to the peer media gateway by detecting a value of the packet loss ratio or the number of lost packets.

7. The method according to claim 6, wherein
the local media gateway receives a control data packet sent from the peer media gateway, the control data packet carries a packet loss ratio and/or the number of lost packets among ordinary data packets carrying no redundant data sent from the local media gateway to the peer media gateway, and the local media gateway sends the redundant data packets to the peer media gateway when detecting that a value of the packet loss ratio or the number of lost packets is greater than a preset value; or
the local media gateway receives a control data packet sent from the peer media gateway, the control data packet carries a packet loss ratio and/or the number of lost packets among redundant data packets sent from the local media gateway to the peer media gateway, and the local media gateway sends ordinary data packets carrying no redundant data to the peer media gateway when detecting that a value of the packet loss ratio or the number of lost packets does not exceed a preset value.

8. A media gateway for controlling redundant data packet transmission, comprising:
a detecting unit, configured to detect whether packet loss occurs to data packets sent from a peer media gateway;
a reporting unit, configured to report a detection result of the detecting unit to a softswitch; and
a transmitting unit, configured to select whether to send redundant data packets to the peer media gateway after receiving a notification from the softswitch.

9. The media gateway according to claim 8, wherein
when the media gateway receives a notification from the softswitch that packet loss occurs to ordinary data packets carrying no redundant data sent from the peer media gateway, the transmitting unit is: a redundant data packet transmitting unit, configured to send redundant data packets to the peer media gateway after receiving the notification from the softswitch; and
when the media gateway receives a notification from the softswitch that no packet loss occurs to redundant data packets sent from the peer media gateway, the transmitting unit is: an ordinary data packet transmitting unit, configured to send ordinary data packets carrying no redundant data to the peer media gateway after receiving the notification from the softswitch.

10. A media gateway for controlling redundant data packet transmission, comprising:
a receiving unit, configured to receive a control data packet sent from a peer media gateway, wherein the control data packet carries a packet loss ratio and/or the number of lost packets among data packets sent from the media gateway to the peer media gateway;
a detecting unit, configured to detect whether a value of the packet loss ratio or the number of lost packets in the control data packet sent from the peer media gateway is greater than a preset value;
a transmitting unit, configured to select whether to send redundant data packets to the peer media gateway according to a detection result of the detecting unit; and
a sending unit, configured to send a control data packet to the peer media gateway, wherein the control data packet carries a packet loss ratio and the number of lost packets among data packets sent from the peer media gateway to the media gateway.

11. The media gateway according to claim 10, wherein
when the detecting unit detects that a packet loss ratio or the number of lost packets among ordinary data packets carrying no redundant data sent from a local media gateway to the peer media gateway is greater than the preset value, the transmitting unit is: a redundant data packet transmitting unit, configured to send redundant data packets to the peer media gateway according to a detection result of the detecting unit; and
when the detecting unit detects that a packet loss ratio or the number of lost packets among redundant data packets sent from the local media gateway to the peer media gateway does not exceed the preset value, the transmitting unit is: an ordinary data packet transmitting unit, configured to send ordinary data packets carrying no redundant data to the peer media gateway according to a detection result of the detecting unit.

12. A system for controlling redundant data packet transmission, comprising: at least two media gateways and a softswitch, wherein
the media gateways are configured to detect a packet loss condition among received data packets when transmitting data packets; and
the softswitch is configured to control whether to transmit redundant data packets between the media gateways according to the packet loss condition of the data packets detected by the media gateways.

13. The system according to claim 12, wherein
one of the at least two media gateways that serves as an active party for detection comprises: a detecting unit, configured to detect whether packet loss occurs to data packets sent from a media gateway serving as a passive party; and a reporting unit, configured to report a detection result of the detecting unit to the softswitch;
the softswitch comprises: a receiving unit, configured to receive the detection result reported by the reporting unit; and a notifying unit, configured to notify the media gateway serving as a passive party of whether sending redundant data packets according to the detection result; and
the media gateway serving as a passive party that establishes a connection with the media gateway serving as an active party for detection comprises: a transmitting unit, configured to select whether to send redundant data packets to the media gateway serving as an active party after receiving a notification from the softswitch.
